# EUROPÄISCHE PATENTANMELDUNG

(11) **EP 1 353 037 A2**
(43) Veröffentlichungstag der Anmeldung: **15.10.2003**
(21) Anmeldenummer: 03003014.2
(22) Anmeldetag: 12.02.2003
(51) Int. Cl.: E06B 9/88, B60J 1/20

(54) **Fensterrollo**

(30) Priorität: 13.04.2002 DE 10216363
(71) Anmelder: HAPPICH Fahrzeug- und Industrieteile GmbH, 42285 Wuppertal (DE)
(72) Erfinder: Churchfield, Vincent, 42477 Radevormwald (DE)

(57) **Zusammenfassung**

Die Erfindung bezieht sich auf ein Fensterrollo (10) mit einer eine Aufwickeleinrichtung aufweisenden Wickelwelle (11), einer auf der Wickelwelle (11) aufgewickelten Rollobahn (12), einen Zugstab (13), an dem das freie Ende der Rollobahn (12) befestigt ist, einer Führungseinrichtung, an der die Endbereiche des Zugstabs (13) senkrecht zur Zugstabsachse längsverschiebbar angeordnet sind und einer innerhalb des Zugstabs (13) angeordneten Bremseinrichtung, die lösbar an der Führungseinrichtung angreift, um den Zugstab (13) in beliebigen Positionen an der Führungseinrichtung festzulegen, und einem gegen die Kraft einer Feder verstellbaren, auf die Bremseinrichtung unter Aufhebung der Bremswirkung einwirkenden Verbindungsorgan (14). Es ist dabei erfindungsgemäß vorgesehen, dass das verstellbare Verbindungsorgan (14) als wenigstens eine mit der Bremseinrichtung in Wirkverbindung stehende, über ein Betätigungselement (15) beaufschlagbare Zugstange (21) ausgebildet ist.

## Beschreibung

Die Erfindung bezieht sich auf ein Fensterrollo mit einer eine Aufwickeleinrichtung aufweisenden Wickelwelle, einer auf der Wickelwelle aufgewickelten Rollobahn, einem Zugstab, an dem das freie Ende der Rollobahn befestigt ist, einer Führungseinrichtung, an der die Endbereiche des Zugstabs senkrecht zur Zugstabsachse längsverschiebbar angeordnet sind und einer innerhalb des Zugstabs angeordneten Bremseinrichtung, die lösbar an der Führungseinrichtung angreift, um den Zugstab in beliebigen Positionen an der Führungseinrichtung festzulegen, und einem gegen die Kraft einer Feder verstellbaren, auf die Bremseinrichtung unter Aufhebung der Bremswirkung einwirkenden Verbindungsorgan.

Aus dem Stand der Technik sind verschiedene Fensterrollos bekannt, bei denen der Zugstab des Fensterrollos in unterschiedlichen Positionen an dessen Führungseinrichtung festgelegt werden kann.

Dies kann bei den bekannten Ausführungsformen z. B. über elektromotorisch betriebene Antriebe erfolgen. Es ist aus dem Stand der Technik weiterhin aus der noch nicht veröffentlichten deutschen Patentanmeldung mit dem Aktenzeichen 101 01 436.8-42 ein Fensterrollo bekannt, mit einem gegen die Kraft einer Feder verstellbaren, auf die Bremseinrichtung unter Aufhebung der Bremswirkung einwirkenden Verbindungsorgan. Es ist in diesem Falle dieses Verbindungsorgan aus einem straff geführten Drahtseil gebildet, das einerseits mit die Bremseinrichtung bildenden Bremsklötzen in Wirkverbindung steht und andererseits mit einem mit einer Betätigungseinrichtung verbundenen Stellorgan. Es weist diese bekannte Ausführungsform eines Fensterrollos mit als Drahtseil ausgebildetem Verbindungsorgan an sich ausreichende Funktionseigenschaften auf, es ergeben sich allerdings durch die Ausbildung des als Drahtseil ausgebildeten Verbindungsorgans hinsichtlich der Produktionstoleranzen einige Nachteile. So ergeben sich beispielsweise bei der Verwendung eines Zugseiles Produktionstoleranzen z. B. von ± 3 mm, was zu deren Ausgleich die Verwendung zusätzlicher Funktionselemente wie z. B. einer Feder oder dgl. erforderlich macht. Diese Feder kann z. B. dazu dienen, einen Betätigungshebel von einer waagerechten in eine senkrechte Position zu überführen, da dieser ansonsten für die Bedienperson schlecht oder gar nicht zu erreichen wäre.

Ausgehend von diesem bekannten Fensterrollo liegt der Erfindung die Aufgabe zugrunde, die bekannte Anordnung unter Beibehaltung der bisherigen Vorteile in der Weise zu verbessern bzw. weiterzuentwickeln, das sich bezüglich der Produktionstoleranzen bei der Herstellung des gewünschten Fensterrollos deutliche Vorteile ergeben. Die gewünschte Anordnung soll dabei auch einfach und kostengünstig herstellbar sein, und weiterhin hinsichtlich ihrer Funktionseigenschaften den bestehenden Anforderungen vollkommen genügen.

Die Aufgabe wird erfindungsgemäß dadurch gelöst, dass das verstellbare Verbindungsorgan als wenigstens eine mit der Bremseinrichtung in Wirkverbindung stehende, über ein Betätigungselement beaufschlagbare Zugstange ausgebildet ist. Auf diese Weise wird erstmalig mit einfachen Mitteln ein Fensterrollo geschaffen, das hinsichtlich der Produktionstoleranzen bzw. hinsichtlich des Toleranz-Ausgleiches bezüglich des mit der Bremseinrichtung zusammenwirkenden Verbindungsorganes gegenüber den bekannten Ausführungsformen deutliche Vorteile aufweist. Es ergibt sich durch die Verwendung einer Zugstange für das besagte Verbindungsorgan insbesondere der Vorteil, dass sich für diese Zugstange klar definierte Toleranzen ergeben, so dass unbestimmte Toleranzen ausgeschaltet werden können. Es kann dadurch auch auf zusätzliche Funktionselemente zur Erzielung eines Toleranz-Ausgleiches weitgehend verzichtet werden. Es ergeben sich außerdem durch die Verwendung einer Zugstange in Richtung auf die Führungseinrichtung bessere Möglichkeiten einer kontinuierlichen Druckausübung auf diese Führungseinrichtung, wodurch die Erzielung einer Arretierung an dieser Führungseinrichtung erleichtert wird.

Bei der bevorzugten Ausführungsform der vorliegenden Erfindung umfasst der Zugstab eine die wenigstens eine Zugstange aufnehmende Ziehleiste, wobei in die freien Enden der Ziehleiste die Bremseinrichtung(en) aufnehmende Verschlusskörper einsetzbar sind. Es empfiehlt sich dabei, dass die Führungseinrichtung aus zwei die Rollobahn an ihren Längsrändern flankierenden im wesentlichen senkrechten Führungsschienen besteht, wobei die Verschlusskörper der Ziehleiste jeweils eine Führungsschiene umschließen, so dass eine Bewegungsführung gegeben ist. Es bildet dieses eine konstruktiv einfache Ausführungsform des erfindungsgemäßen Fensterrollos.

Nach einem weiteren Merkmal der vorliegenden Erfindung besteht die Bremseinrichtung aus an den zu den Führungsschienen gerichteten Enden der Zugstangen festgelegten Bremsklötzen, die in jeweils einer Öffnung in den Verschlusskörpern geführt sind. Zweckmäßig ist dabei an den von den Führungsschienen abgewandten Enden der Zugstangen jeweils eine Zugstangenendkappe festgelegt. Es empfiehlt sich dabei, dass im Bereich der Mitte der Ziehleiste zwischen den Zugstangenendkappen eine die Bremsklötze nach außen drückende Druckfeder ausgebildet ist. Es können durch diese Druckfeder die Produktionstoleranzen der wenigstens einen Zugstange zusätzlich ausgeglichen werden.

Um eine Sperrung zwischen der Ziehleiste und der Führungseinrichtung zu erreichen, empfiehlt es sich nach einem weiteren Merkmal der vorliegenden Erfindung, dass der Abstand zwischen den Führungsschienen des Fensterrollos geringer ist als der Länge der die Bremseinrichtung, die Zugstangen und die Druckfeder aufnehmenden Ziehleiste.

Nach einem weiteren Merkmal der vorliegenden Erfindung wird vorgeschlagen, dass wenigstens eine der Führungsschienen des Fensterrollos zur Erhöhung der Reibung zwischen Bremseinrichtung und Führungsschiene und damit der Bremswirkung wenigstens einen im wesentlichen längs eingelassenen Elastomerstreifen umfasst.

Zweckmäßig ist es außerdem, dass das Betätigungselement für das als wenigstens eine Zugstange ausgebildete Verbindungsorgan als ein im wesentlichen keilförmiger Schieber mit zu seiner Mitte hin gerichteten Schrägflächen ausgebildet ist, die mit in den Zugstangenendkappen ausgebildeten, entsprechenden Gegenschrägflächen zusammenwirken. Mit diesen Mitteln lässt sich das mit der Bremseinrichtung in Wirkverbindung stehende Verbindungsorgan in geeigneter Weise einfach betätigen.

Bei einer alternativen Ausführungsform der vorliegenden Erfindung umfasst die Führungseinrichtung zwei die Rollobahn an ihren Längsrändern flankierende Zahnstangen und zwei damit kämmende Zahnräder, die an den Endbereichen der Zugstangen angeordnet sind. Es kann dabei zweckmäßig die Bremseinrichtung an wenigstens einem der Zahnräder oder wenigstens einer ein Zahnrad tragenden Lagerachse angreifen.

Nach einem bevorzugten Ausgestaltungsmerkmal dieser alternativen Ausführungsform der vorliegenden Erfindung ist vorgesehen, dass die Zahnstangen an den äußeren Endbereichen mit einem jeweils eine Zahnstange umgreifenden Lagergehäuse versehen sind, dass jedes Lagergehäuse ein drehfest auf einer Lagerachse angeordnetes Zahnrad trägt und dass zumindest eine der Lagerachsen zum Abbremsen der Rückstellbewegung der Aufwickeleinrichtung mit einer Reibungsbremse ausgerüstet ist, die aus einem gegenüber der Lagerachse verdrehfest im Lagergehäuse angeordneten Formkörper aus verschleißfestem, zähelastischem Kunststoffmaterial besteht, welcher eine Bohrung zur Aufnahme eines axialen Bereiches der Lagerachse aufweist, deren Durchmesser kleiner als der Durchmesser der Lagerachse ausgeführt ist, jedoch eine Relativbewegung zwischen Formkörper und Lagerachse zulässt.

Gemäß einer anderen Ausführungsform dieser alternativen Möglichkeit für die Ausbildung der vorliegenden Erfindung ist vorgehen, dass an unverzahnten Umfangsbereichen der Zahnräder jeweils ein durch jeweils eine Druckfeder belasteter Bremsklotz angreift, wobei die Anordnung der Bremsklötze so getroffen ist, dass sie über die Zugstangen gegen die Kraft der Druckfeder unter Aufhebung der Bremswirkung gegeneinander bewegbar sind.

Nach einem weiteren Merkmal dieser alternativen Möglichkeit für die Ausbildung der Erfindung ist vorgesehen, dass zumindest eines der Zahnräder neben der mit Zahnstange kämmenden Verzahnung eine Außenverzahnung aufweist, in deren Zahnlücken ein unter dem Einfluss einer Druckfeder stehender Bremskörper einrastbar und mittels der Zugstangen gegen die Kraft der Druckfeder wieder ausrastbar ist.

Nach einem letzten Merkmal der vorliegenden Erfindung ist für einen weiteren Ausgleich der Karosserietoleranzen vorgesehen, dass die Bremseinrichtung aus an den zu den Führungsschienen gerichteten Enden der Zugstangen angeordneten, voneinander entkoppelten Bremselementen besteht.

Die Erfindung ist in den Figuren der Zeichnung in mehreren Ausführungsbeispielen dargestellt. Es zeigen:
- Fig. 1: ein komplettes Fensterrollo in Ansicht,
- Fig. 2: einen teilweise weggebrochenen Vertikalschnitt durch einen Teilbereich einer ersten Ausführungsform des erfindungsgemäßen Fensterrollos,
- Fig. 3: einen beidseitig weggebrochenen Vertikalschnitt durch den mittleren Teil der Ziehleiste der Ausführungsform des Fensterrollos nach Fig. 2,
- Fig. 4: einen weggebrochenen Horizontalschnitt des einen Endbereiches der Ziehleiste der Ausführungsform des Fensterrollos nach Fig. 2,
- Fig. 5: einen Teilbereich einer alternativen Ausführungsform des Fensterrollos im Vertikalschnitt,
- Fig. 6: einen Teilbereich des Fensterrollos nach Fig. 5 im Horizontalschnitt,
- Fig. 7: einen Teilbereich einer abgewandelten alternativen Ausführungsform des erfindungsgemäßen Fensterrollos im Vertikalschnitt,
- Fig. 8: einen Teilbereich einer weiteren alternativen Ausführungsform des erfindungsgemäßen Fensterrollos im Vertikalschnitt.
- Fig. 9: einen beidseitig weggebrochenen Vertikalschnitt durch den mittleren Teil der Ziehleiste einer letzten Ausführungsform des erfindungsgemäßen Fensterrollos.

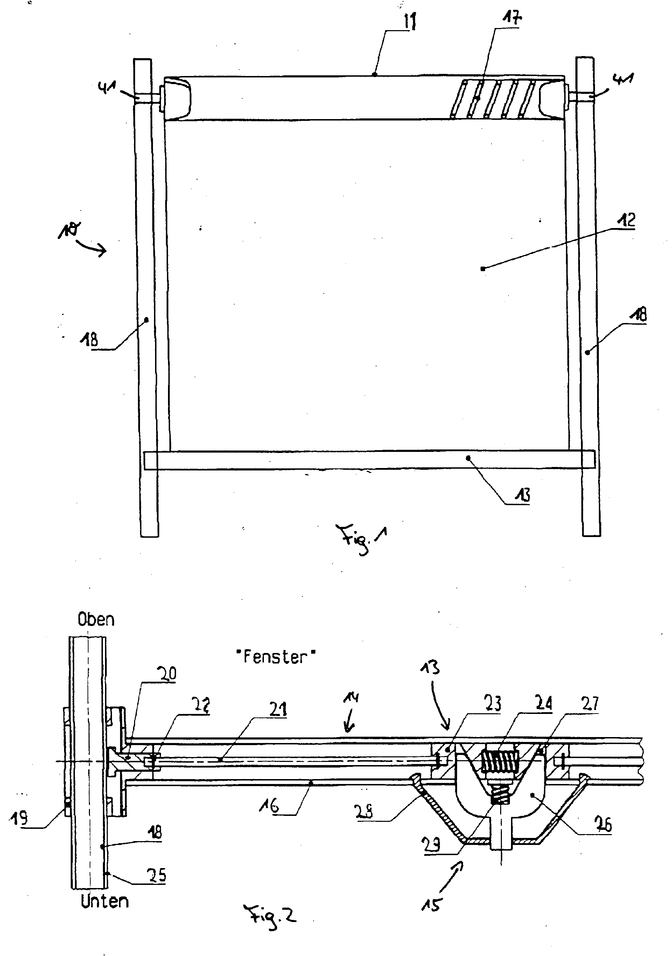

Das erfindungsgemäße Fensterrollo ist generell mit 10 bezeichnet. Das Fensterrollo 10 besteht im wesentlichen, siehe dazu zunächst insbesondere die Fig. 1 der Zeichnung, aus einer eine Aufwickeleinrichtung aufweisenden Wickelwelle 11, einer darauf auf- und abwickelbar angeordneten Rollobahn 12, einem Zugstab 13, an dem das freie Ende der Rollobahn 12 befestigt ist, und einer Führungseinrichtung, an der die Endbereiche des Zugstabs 13 senkrecht zur Zugstabsachse längsverschiebbar angeordnet sind.

Es besteht dabei die Wickelwelle 11 zweckmäßig aus einem Rohr mit endseitigen, nicht bezeichneten Verschlusselementen, Drehzapfen 41 und einer in dem Inneren der Wickelwelle 11, in der Fig. 1 der Zeichnung lediglich angedeutet dargestellten Aufwickelvorrichtung mit Torsionsfeder 17.

Das erfindungsgemäße Fensterrollo 10 umfasst weiterhin eine innerhalb des Zugstabs 13 angeordnete Bremseinrichtung, die lösbar an der Führungseinrichtung angreift, um den Zugstab 13 in beliebigen Positionen an der Führungseinrichtung festzulegen, das Fensterrollo 10 umfasst weiterhin ein gegen die Kraft einer Feder verstellbares, auf die Bremseinrichtung unter Aufhebung der Bremswirkung einwirkendes Verbindungsorgan 14, siehe z. B. die Fig. 2 der Zeichnung.

Das verstellbare Verbindungsorgan 14 ist erfindungsgemäß als wenigstens eine mit der Bremseinrichtung in Wirkverbindung stehende, über ein Betätigungselement 15 beaufschlagbare Zugstange 21 ausgebildet. Es zeigt dazu die Fig. 2 der Zeichnung einen Teilbereich einer ersten Ausführungsform des erfindungsgemäßen Fensterrollos 10 im Vertikalschnitt. In diesem Falle umfasst der Zugstab 13 dieser ersten Ausführungsform des erfindungsgemäßen Fensterrollos 10 eine die wenigstens eine Zugstange 21 aufnehmende Ziehleiste 16, wobei in die freien Enden der Ziehleiste 16 die Bremseinrichtung(en) aufnehmende Verschlusskörper 19 einsetzbar sind. Bei dieser Ausführungsform gemäß der Fig. 2 der Zeichnung besteht die Führungseinrichtung aus zwei die Rollobahn 12 an ihren Längsrändern flankierenden im wesentlichen senkrechten Führungsschienen 18, wobei die Verschlusskörper 19 der Ziehleisten 16 jeweils eine Führungsschiene 18 umschließen, so dass eine Bewegungsführung gegeben ist. Gleichzeitig kann über diese Ausgestaltung eine Bremsfunktion realisiert werden.

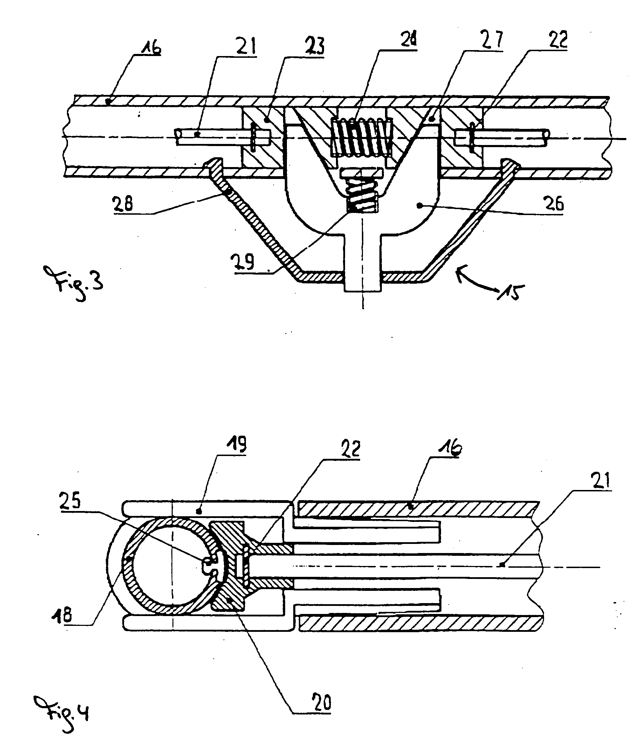

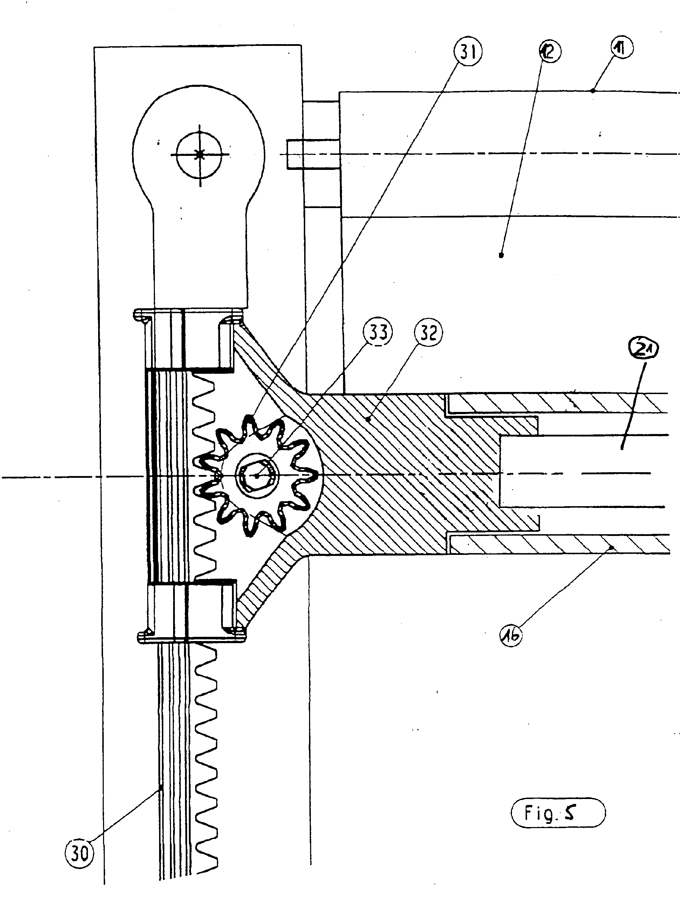

Die Bremseinrichtung besteht dabei aus an den zu den Führungsschienen 18 gerichteten Enden der Zugstangen 21 festgelegten Bremsklötzen 20, siehe dazu wiederum insbesondere die Fig. 2 der Zeichnung, wobei die Bremsklötze 20 in jeweils einer Öffnung in den Verschlusskörpern 19 geführt sind. Die Bremsklötze 20 werden dabei an diesen Enden der Zugstangen 21 mit Hilfe von Befestigungsringen 22 montiert, siehe dazu auch die Fig. 4 der Zeichnung. An den von den Führungsschienen 18 abgewandten Enden der Zugstangen 21 ist jeweils eine Zugstangenendkappe 23 festgelegt, siehe wieder die Fig. 2 sowie auch die Fig. 3 der Zeichnung, wobei die jeweilige Zugstangenendkappe 23 jeweils durch einen Befestigungsring 22 fixiert wird.

Im Bereich der Mitte der Ziehleiste 16 ist, siehe insbesondere die Fig. 3 der Zeichnung, zwischen den Zugstangenendkappen 23 eine die Bremsklötze 20 nach außen drückende Druckfeder 24, insbesondere Zylinderdruckfeder, ausgebildet. Um eine Sperrung zwischen der Ziehleiste 16 und den Führungsschienen 18 zu erzeugen, ist der Abstand zwischen den Führungsschienen 18 des Fensterrollos 10 geringer als die Länge der die Bremseinrichtung, die Zugstangen 21 und die Druckfeder 24 aufnehmenden Ziehleiste. Es hat dies zur Folge, dass die Druckfeder 24, wie Zylinderdruckfeder, ständig unter Kompression gehalten wird. Die Bremsklötze 20 werden demzufolge auf die Führungsschienen 18 nach außen gedrückt und erzeugen somit eine Sperre zwischen der Ziehleiste 16 und den Führungsschienen 18. Es umfasst dabei wenigstens eine der Führungsschienen 18 des Fensterrollos 10 zur Erhöhung der Reibung zwischen Bremseinrichtung, d. h. den Bremsklötzen 20, und der Führungsschiene 18 und damit der Bremswirkung wenigstens einen im wesentlichen längs eingelassenen Elastomerstreifen 25, siehe dazu wieder die Fig. 2 sowie auch insbesondere die Fig. 4 der Zeichnung. In Abwandlung dazu können ergänzend die Bremsklötze 20 zur weiteren Erhöhung der Reibung mit einem thermoplastischen Elastomer überspritzt werden.

In der Fig. 3 der Zeichnung ist insbesondere die Ausbildung des Betätigungselementes 15 für das Verbindungsorgan 14 zu entnehmen. Dieses Betätigungselement 15 für das als wenigstens eine Zugstange 21 ausgebildete Verbindungsorgan 14 ist als ein im wesentlichen keilförmiger Schieber 26 mit zu seiner Mitte hin gerichteten Schrägflächen ausgebildet, die mit in den Zugstangenendkappen 23 ausgebildeten entsprechenden Gegenschrägflächen zusammenwirken. Diese nichtbezeichneten Gegenschrägflächen können in mit 27 bezeichneten Aufnahmen angeordnet sein, die sich jeweils in den Zugstangenendkappen 23 befinden.

Der keilförmige Schieber 26 bewirkt nun über die jeweilige Schräge ein Zusammenziehen der Zugstangenendkappen 23 gegen die mittig sitzende Druckfeder 24, wodurch die Bremsklötze 20 sich von den Führungsschienen 18 lösen. Durch diese Aufhebung der Bremswirkung wird eine Verstellung des Lichtschutzes möglich. Der innerhalb des mit 28 bezeichneten Griffgehäuses angeordnete keilförmige Schieber 26 erzeugt, wenn er in der Betätigungsrichtung nach unten gedrückt wird, mit Hilfe einer mit 29 bezeichneten weiteren zylindrischen Druckfeder Widerstand. Sobald der keilförmige Schieber 26 entlastet wird, drückt die Feder 29 diesen keilförmigen Schieber 26 auf die ursprüngliche Position zurück. Es wird dadurch ein Zurückschieben bzw. eine Entlastung der zwischen den beiden Zugstangenendkappen 23 gelagerten Druckfeder 24 wie Zylinderdruckfeder bewirkt. Es fahren dann die Zugstangen 21 bzw. die Bremsklötze 20 auseinander und das Fensterrollo 10 wird in der gewünschten Position gesperrt.

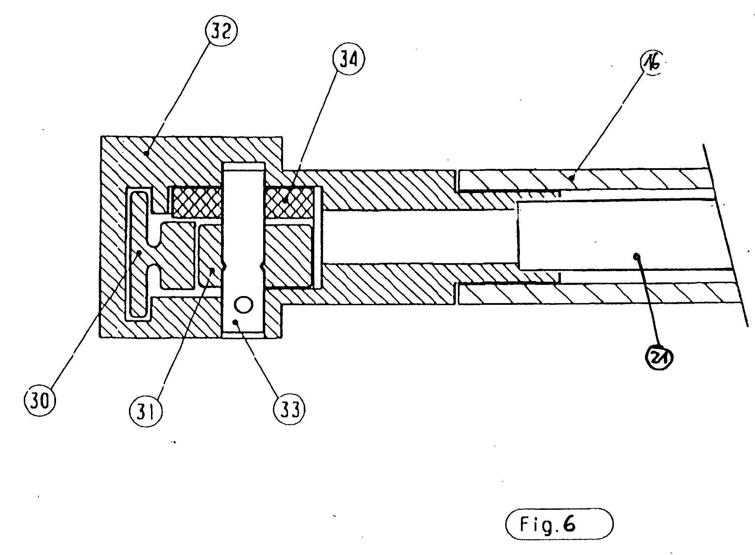

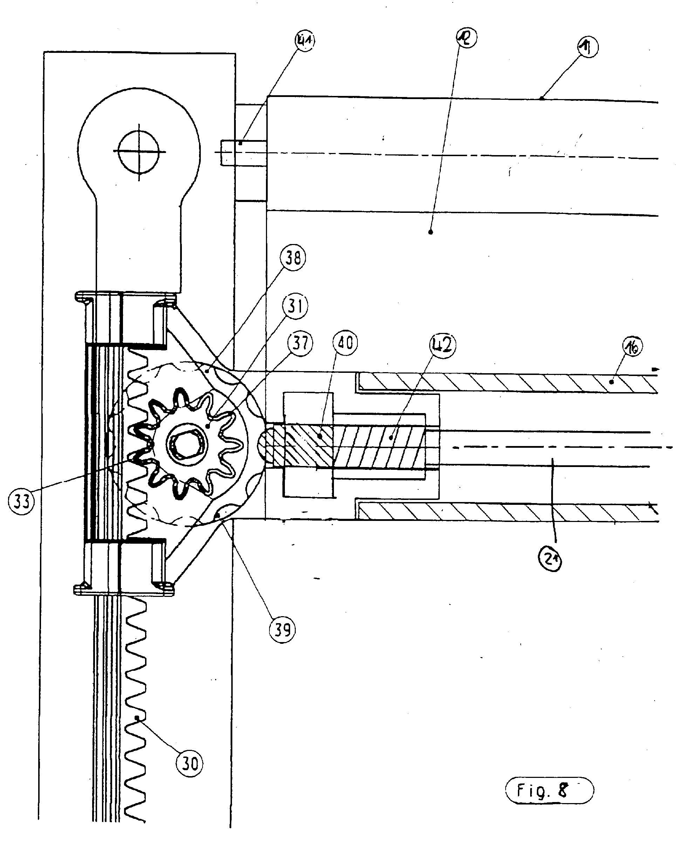

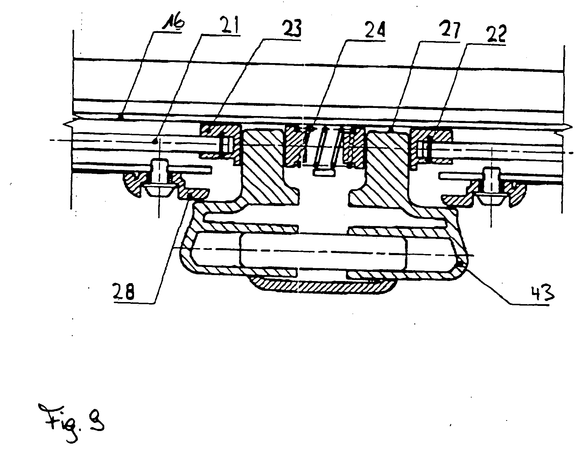

In den Fig. 5 bis 8 der Zeichnung ist eine alternative Ausgestaltungsform des erfindungsgemäßen Fensterrollos 10 in verschiedenen Ausgestaltungsformen dargestellt. In diesem Falle umfasst die Führungseinrichtung zwei die Rollobahn 12 an ihren Längsrändern flankierende Zahnstangen 30 und zwei damit kämmende Zahnräder 31, die an den Endbereichen der Zugstangen 21 angeordnet sind, siehe dazu beispielsweise die Ausführungsform gemäß der Fig. 7 oder der Fig. 8 der Zeichnung. Bei dieser alternativen Ausführungsform des erfindungsgemäßen Fensterrollos 10 greift die Bremseinrichtung an wenigstens einem der Zahnräder 31 oder wenigstens eine ein Zahnrad 31 tragenden Lagerachse 33 an.

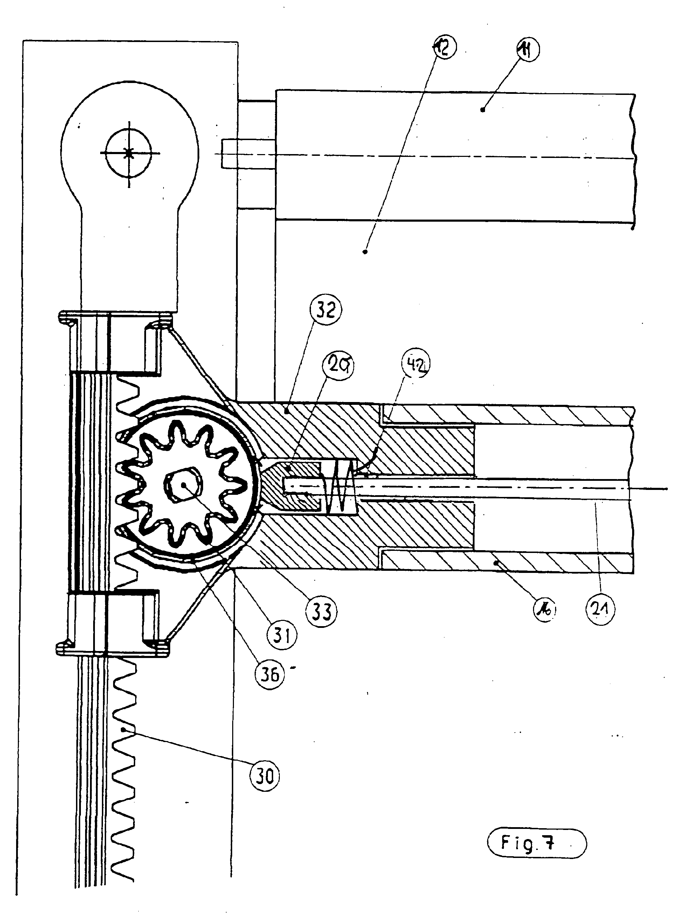

Die alternative Ausführungsform des erfindungsgemäßen Fensterrollos 10 lässt sich auf verschiedene Weisen ausführen. Bei dem in den Fig. 5 und 6 der Zeichnung dargestellten Ausführungsbeispiel sind die Zugstangen 21 an den äußeren Endbereichen mit einem jeweils eine Zahnstange 30 umgreifenden Lagergehäuse 32 versehen, wobei jedes Lagergehäuse 32 ein drehfest auf einer Lagerachse 33 angeordnetes Zahnrad 31 trägt und wobei zumindest eine der Lagerachsen 33 zum Abbremsen der Rückstellbewegung der Aufwickeleinrichtung mit einer Reibungsbremse ausgerüstet ist. Diese Reibungsbremse besteht, siehe insbesondere die Fig. 6 der Zeichnung, aus einem gegenüber der Lagerachse 33 verdrehfest im Lagergehäuse 32 angeordneten Formkörper 34 aus verschleißfestem, zähelastischem Kunststoffmaterial, wobei der Formkörper 34 eine Bohrung zur Aufnahme eines axialen Bereiches der Lagerachse 33 aufweist, deren Durchmesser kleiner als der Durchmesser der Lagerachse 33 ausgeführt ist, jedoch eine Relativbewegung zwischen Formkörper 34 und Lagerachse 33 zulässt. Bei dieser Ausführungsform wird das Zahnrad 31 mit der Verzahnung der Zahnstange 30 kämmen, wie auch das am anderen Ende der Ziehleiste 16 befindliche zweite Zahnrad 31 mit der zugehörigen Verzahnung der zweiten Zahnstange 30 kämmen wird, so dass der Zugstab 13 beim Abziehen der Rollobahn 12 von der Wickelwelle 11 nicht verkanten kann. Der aus der Fig. 6 ersichtliche Formkörper 34 dient dabei wie erwähnt als Reibungsbremse und besteht aus einem verschleißfesten, zähelastischen Kunststoffmaterial, wie aus einem thermoplastischen Polyesterelastomer. Da die Bohrung des Formkörpers 34 zur Aufnahme eines axialen Bereiches der Lagerachse 33 einen Öffnungsquerschnitt aufweist, der kleiner ist als der Querschnitt der Lagerachse 33, wird diese Lagerachse 33 nach Art einer Presspassung in dieser Bohrung sitzen. Diese Presspassung ist dabei derart gewählt, dass noch eine Relativbewegung zwischen dem Formkörper 34 und Lagerachse 33 möglich ist und eine Arretierung des Fensterrollos 10 durch eine Angleichung der Federkraft der Aufwickelvorrichtung und den Formkörpern 34 bewirkt wird.

Bei der Ausführungsform des erfindungsgemäßen Fensterrollos 10 nach der Fig. 7 der Zeichnung greift an unverzahnten Umfangsbereichen 36 der Zahnräder 31 jeweils ein durch jeweils eine Druckfeder 42 belasteter Bremsklotz 20 an, wobei die Anordnung der Bremsklötze 20 so getroffen ist, dass sie über durch das Lagergehäuse 32 hindurchgeführte Zugstangen 21 gegen die Kraft der Druckfeder 42 unter Aufhebung der Bremswirkung gegeneinander bewegbar sind. Bei dieser Ausführungsform sind also wieder in die Enden der Ziehleiste 16 Lagergehäuse 32 eingesetzt, die jeweils zur Lagerung einer Lagerachse 33 und eines Zahnrades 31 dienen und die jeweils ähnlich, wie in Fig. 6 dargestellt, eine Zahnstange 30 umgreifen. Die Zahnräder 31 weisen jeweils einen verzahnten Umfangsbereich auf, der mit den Zahnstangen 30 zusammenwirkt und daneben auch einen unverzahnten Umfangsbereich 36, der mit den Bremsklötzen 20 zusammenwirkt. Die Ausbildung der Bremseinrichtung, die Wirkungsweise der Bremse sowie die Aufhebung der Bremswirkung zum Verstellen der Rollobahn 12 entspricht im übrigen der Ausführungsform der Fig. 5 der Zeichnung.

In der Fig. 8 der Zeichnung ist schließlich eine weitere Ausführungsform dieser alternativen Variante des erfindungsgemäßen Fensterrollos 10 dargestellt. In diesem Falle weist zumindest eines der Zahnräder 31 neben der mit der Zahnstange 30 kämmenden Verzahnung 37 eine Außenverzahnung 38 auf, in deren Zahnlücken 39 ein unter dem Einfluss einer Druckfeder 42 stehender Bremskörper 40 einrastbar und mittels einer Zahnstange 21 gegen die Kraft der Druckfeder 42 wieder ausrastbar ist.

In der Fig. 9 der Zeichnung ist eine letzte Ausführungsform des erfindungsgemäßen Fensterrollos 10 dargestellt. In diesem Falle besteht die Bremseinrichtung aus an den zu den Führungsschienen 18 gerichteten Enden der Zugstangen 21 angeordneten, voneinander entkoppelten Bremselementen, in diesem Falle Bremsklötzen 20. Diese Entkopplung der Bremselemente bewirkt einen weiteren Ausgleich der Karosserietoleranzen. Es.wird dabei bewirkt, dass jedes Bremselement, d. h. hier jeder Bremsklotz 20 auf die Führungsschiene 18, unabhängig voneinander, nach außen gedrückt und somit eine Sperre zwischen der Ziehleiste 16 und den Führungsschienen 18 erzeugt wird. Um die Sperrung aufzuheben, werden die Zugstangenendkappen 23, wie dargestellt mit einem an den Zugstangenendklappen 23 angesetzten Hebel 43 zusammengedrückt, wobei dieser in Aufnahmen 27 in den Zugstangenendkappen 23 eingreift. Dies hat zur Folge, dass die zylindrische Druckfeder 24 unter Kompression gesetzt wird und die Bremsklötze 20 sich von den Führungsschienen 18 lösen.

Durch das erfindungsgemäße Fensterrollo 10 werden insbesondere in produktionstechnischer Hinsicht bezüglich der Produktionstoleranzen bzw. der Möglichkeiten für einen Toleranz-Ausgleich gegenüber den bekannten Ausführungsformen Vorteile erreicht. Weiterhin werden durch das erfindungsgemäße Fensterrollo 10 die Möglichkeiten für eine Arretierung des Zugstabes 13 dieses Fensterrollos 10 in beliebigen Positionen an der Führungseinrichtung verbessert.

Wie bereits erwähnt, sind die dargestellten Ausführungsformen nur beispielsweise Verwirklichungen der Erfindung, diese ist nicht darauf beschränkt, es sind vielmehr noch mancherlei Abänderungen und Ausbildungen möglich. So sind insbesondere Abwandlungen hinsichtlich der Ausführung der Führungseinrichtung sowie auch der lösbar an dieser angreifenden Bremseinrichtung möglich, weiterhin denkbar sind auch Variationen bezüglich der Ausbildung des als Zugstange ausgebildeten verstellbaren Verbindungsorganes.

### Bezugszeichenliste:

- 10: Fensterrollo
- 11: Wickelwelle
- 12: Rollobahn
- 13: Zugstab
- 14: Verbindungsorgan
- 15: Betätigungselement
- 16: Ziehleiste
- 17: Torsionsfeder
- 18: Führungsschiene
- 19: Verschlusskörper (in 21)
- 20: Bremsklotz
- 21: Zugstange
- 22: Befestigungsring (an 21)
- 23: Zugstangenendkappe
- 24: Druckfeder
- 25: Elastomerstreifen (an 18)
- 26: Keilförmiger Schieber
- 27: Aufnahme (in 23 für 26)
- 28: Griffgehäuse
- 29: Druckfeder
- 30: Zahnstange
- 31: Zahnrad
- 32: Lagergehäuse
- 33: Lagerachse
- 34: Formkörper
- 36: Unverzahnter Umfangsbereich (von 31)
- 37: Kämmende Verzahnung (von 31 an 30)
- 38: Außenverzahnung (von 31)
- 39: Zahnlücke (von 38)
- 40: Bremskörper
- 41: Drehzapfen
- 42: Druckfeder (an 20, 40)
- 43: Hebel (an 23 angreifend)

## Patentansprüche

1. Fensterrollo (10) mit einer eine Aufwickeleinrichtung aufweisenden Wickelwelle (11), einer auf der Wickelwelle (11) aufgewickelten Rollobahn (12), einen Zugstab (13), an dem das freie Ende der Rollobahn (12) befestigt ist, einer Führungseinrichtung, an der die Endbereiche des Zugstabs (13) senkrecht zur Zugstabsachse längsverschiebbar angeordnet sind und einer innerhalb des Zugstabs (13) angeordneten Bremseinrichtung, die lösbar an der Führungseinrichtung angreift, um den Zugstab (13) in beliebigen Positionen an der Führungseinrichtung festzulegen, und einem gegen die Kraft einer Feder verstellbaren, auf die Bremseinrichtung unter Aufhebung der Bremswirkung einwirkenden Verbindungsorgan (14),
**dadurch gekennzeichnet,**
**dass** das verstellbare Verbindungsorgan (14) als wenigstens eine mit der Bremseinrichtung in Wirkverbindung stehende, über ein Betätigungselement (15) beaufschlagbare Zugstange (21) ausgebildet ist.

2. Fensterrollo nach Anspruch 1, **dadurch gekennzeichnet, dass** der Zugstab (13) eine die wenigstens eine Zugstange (21) aufnehmende Ziehleiste (16) umfasst, wobei in die freien Enden der Ziehleiste (16) die Bremseinrichtung(en) aufnehmende Verschlusskörper (19) einsetzbar sind.

3. Fensterrollo nach Anspruch 2, **dadurch gekennzeichnet, dass** die Führungseinrichtung aus zwei die Rollobahn (12) an ihren Längsrändern flankierenden im wesentlichen senkrechten Führungsschienen (18) besteht, wobei die Verschlusskörper (19) der Ziehleiste (16) jeweils eine Führungsschiene (18) umschließen, so dass eine Bewegungsführung gegeben ist.

4. Fensterrollo nach Anspruch 2 oder 3, **dadurch gekennzeichnet, dass** die Bremseinrichtung aus an den zu den Führungsschienen (18) gerichteten Enden der Zugstangen (21) festgelegten Bremsklötzen (20) besteht, die in jeweils einer Öffnung in den Verschlusskörpern (19) geführt sind.

5. Fensterrollo nach Anspruch 4, **dadurch gekennzeichnet, dass** an den von den Führungsschienen (18) abgewandten Enden der Zugstangen (21) jeweils eine Zugstangenendkappe (23) festgelegt ist.

6. Fensterrollo nach Anspruch 5, **dadurch gekennzeichnet, dass** im Bereich der Mitte der Ziehleiste (16) zwischen den Zugstangenendkappen (23) eine die Bremsklötze (20) nach außen drückende Druckfeder (24) ausgebildet ist.

7. Fensterrollo nach einem der Ansprüche 1 bis 6, **dadurch gekennzeichnet, dass** der Abstand zwischen den Führungsschienen (18) des Fensterrollos (10) geringer ist als die Länge der die Bremseinrichtung, die Zugstangen (21) und die Druckfeder (24) aufnehmenden Ziehleiste (16).

8. Fensterrollo nach einem der Ansprüche 3 bis 7, **dadurch gekennzeichnet, dass** wenigstens eine der Führungsschienen (18) des Fensterrollos (10) zur Erhöhung der Reibung zwischen Bremseinrichtung und Führungsschiene (18) und damit der Bremswirkung wenigstens einen im wesentlichen längs eingelassenen Elastomerstreifen (25) umfasst.

9. Fensterrollo nach einem der Ansprüche 1 bis 8, **dadurch gekennzeichnet, dass** das Betätigungselement (15) für das als wenigstens eine Zugstange (21) ausgebildete Verbindungsorgan (14) als ein im wesentlichen keilförmiger Schieber (26) mit zu seiner Mitte hin gerichteten Schrägflächen ausgebildet ist, die mit in den Zugstangenendkappen (23) ausgebildeten, entsprechenden Gegenschrägflächen zusammenwirken.

10. Fensterrollo nach Anspruch 1, **dadurch gekennzeichnet, dass** die Führungseinrichtung zwei die Rollobahn (12) an ihren Längsrändern flankierende Zahnstangen (30) und zwei damit kämmende Zahnräder (31) umfasst, die an den Endbereichen der Zugstangen (21) angeordnet sind.

11. Fensterrollo nach Anspruch 10, **dadurch gekennzeichnet, dass** die Bremseinrichtung an wenigstens einem der Zahnräder (31) oder wenigstens einer ein Zahnrad (31) tragenden Lagerachse (33) angreift.

12. Fensterrollo nach Anspruch 10 oder 11, **dadurch gekennzeichnet, dass** die Zugstangen (21) an dem äußeren Endbereichen mit einem jeweils eine Zahnstange (30) umgreifenden Lagergehäuse (32) versehen sind, dass jedes Lagergehäuse (32) ein drehfest auf einer Lagerachse (33) angeordnetes Zahnrad (31) trägt, und dass zumindest eine der Lagerachsen (33) zum Abbremsen der Rückstellbewegung der Aufwickeleinrichtung mit einer Reibungsbremse ausgerüstet ist, die aus einem gegenüber der Lagerachse (33) verdrehfest im Lagergehäuse (32) angeordneten Formkörper (34) aus verschleißfestem, zähelastischem Kunststoffmaterial besteht, welcher eine Bohrung zur Aufnahme eines axialen Bereiches der Lagerachse (33) aufweist, deren Durchmesser kleiner als der Durchmesser der Lagerachse (33) ausgeführt ist, jedoch eine Relativbewegung zwischen Formkörper (34) und Lagerachse (33) zulässt.

13. Fensterrollo nach Anspruch 10 oder 11, **dadurch gekennzeichnet, dass** an unverzahnten Umfangsbereichen (36) der Zahnräder (31) jeweils ein durch jeweils eine Druckfeder (24) belasteter Bremsklotz (20) angreift, wobei die Anordnung der Bremsklötze (20) so getroffen ist, dass sie über die Zahnstangen (21) gegen die Kraft der Druckfeder (24) unter Aufhebung der Bremswirkung gegeneinander bewegbar sind.

14. Fensterrollo nach Anspruch 10 oder 11, **dadurch gekennzeichnet, dass** zumindest eines der Zahnräder (31) neben der mit der Zahnstange (30) kämmenden Verzahnung (37) eine Außenverzahnung (38) aufweist, in deren Zahnlücken (39) ein unter dem Einfluss einer Druckfeder (24) stehender Bremskörper (40) einrastbar und mittels der Zugstangen (21) gegen die Kraft der Druckfeder (24) wieder ausrastbar ist.

15. Fensterrollo nach einem der Ansprüche 1 bis 14, **dadurch gekennzeichnet, dass** die Bremseinrichtung aus an den zu den Führungsschienen (18) gerichteten Enden der Zugstangen (21) angeordneten, voneinander entkoppelten Bremselementen besteht.
